# EUROPÄISCHE PATENTSCHRIFT

(11) **EP 4 018 894 B1**
(45) Veröffentlichungstag und Bekanntmachung des Hinweises auf die Patenterteilung: **22.01.2025**
(21) Anmeldenummer: 21212752.6
(22) Anmeldetag: 07.12.2021
(51) Int. Cl.: A47K 3/28, E04H 1/12, E04B 1/343, E04B 1/344, E04B 1/348, B60R 15/02, B60P 3/00

(54) **MOBILER DUSCHCONTAINER MIT DUSCHKABINEN**
MOBILE SHOWER CONTAINER WITH SHOWER CUBICLES
CONTENEUR MOBILE DE DOUCHE POURVU DE CABINETS DE DOUCHE

(30) Priorität: 22.12.2020 DE 102020134552
(43) Veröffentlichungstag der Anmeldung: 29.06.2022
(73) Patentinhaber: Weiß, Erhard, 36323 Grebenau (DE)
(72) Erfinder: Weiß, Erhard, 36323 Grebenau (DE)
(74) Vertreter: VKK Patentanwälte PartG mbB

(56) Entgegenhaltungen:
- DE-B3- 102004 015 412
- DE-U1- 20 118 752
- DE-U1- 202016 105 859

## Beschreibung

Die vorliegende Erfindung betrifft einen Container mit Duschkabinen, wobei der Container vorzugsweise für einen Trailer, insbesondere einen Anhänger für ein Kraftfahrzeug oder einen Auflieger, ist und der Container als ein Absetz- oder Abrollcontainer ausgebildet ist.

Aus der DE 20 2014 101 867 U1 ist ein Trailer mit Duschkabinen bekannt. Hierbei handelt es sich um eine mobile Tanknotdusche, die auf einem Kraftfahrzeuganhänger montiert ist Die Tanknotdusche ist insbesondere für verunfallte Personen vorgesehen, die beispielsweise Verätzungen oder Verbrennungen erlitten haben und mit einem starken Wasserstrahl abzuduschen sind. Die bekannte Tanknotdusche ist für Großveranstaltungen unter freiem Himmel, bei denen eine Vielzahl von Personen in kürzester Zeit duschen wollen, nicht geeignet.

Eine mobile Duschvorrichtung mit einer Vielzahl von Duschkabinen, die beispielsweise bei Großveranstaltungen eingesetzt werden kann, ist aus der DE 20 2005 012 413 U1 bekannt. Die bekannte Duschvorrichtung ist zusammenklappbar ausgestaltet, so dass sie in einem Container transportiert und vor Ort aufgebaut werden kann. Zum Schutz gegen Witterungseinflüsse wird die bekannte Duschvorrichtung in einem Zelt untergebracht. Der für den Aufbau der Duschvorrichtung und des Zeltes erforderliche Aufwand ist nachteilig.

Die DE 20 2016 105 859 U1 macht einen Trailer mit Duschkabinen vorbekannt.

Aus der DE 201 18 752 U1 ist eine Duschanlage zu Entfernung atomarer, biologischer und chemischer Stoffe vorbekannt.

Die DE 10 2004 015 412 B3 offenbart eine mobile Zivilschutzeinheit mit einem containerartigen Behälter zur Aufnahme von Einrichtungen zur Kampf- und/oder Gefahrstoffidentifikation und zur Kampfstoff- und oder Gefahrstoffe-Dekontamination von Personen und Geräten.

Der vorliegenden Erfindung liegt nun die Aufgabe zugrunde, die Nachteile des Standes Technik zu überwinden und eine mobile Duschvorrichtung bereitzustellen, die eine möglichst große Zahl von Duschkabinen auf der zur Verfügung stehenden Fläche aufweist und einen minimalen Aufbauaufwand erfordert.

Die Aufgabe wird gelöst durch den Gegenstand des unabhängigen Patentanspruchs. Bevorzugte Ausgestaltungen und Weiterentwicklungen der Erfindung ergeben sich aus den in den jeweiligen rückbezogenen Unteransprüchen genannten Merkmalen, den Zeichnungen und der zugehörigen Beschreibung.

Die erfindungsgemäße Lösung sieht vor, dass ein mobiler Duschcontainer mit Duschkabinen mit zwei gegenüberliegenden Stirnseiten und zwei gegenüberliegenden Längsseiten bereitgestellt wird, bei dem zwischen den Stirnseiten ein Duschbereich gebildet ist, in dem zwei entlang der Längsseiten ausgerichtete Reihen von Duschkabinen aneinander angrenzend angeordnet sind, wobei für die Duschkabinen ein äußerer Zugang von einer Längsseite des Containers vorhanden ist. Durch den Zugang der Duschkabinen von außen kann die gesamte zur Verfügung stehende Fläche des Containers für die Duschkabinen selbst genutzt werden, ohne dass Teilflächen für Gänge als Zugang zu den Duschkabinen erforderlich wären. Es werden praktisch die gesamten rechts und links angeordneten Außenseiten (Längsseiten) für Zugänge zu den Duschkabinen genutzt. Da alle Duschkabinen von außen direkt begehbar sind, ist die komplette Fläche des Duschcontainers optimal ausgenutzt. Mit Vorteil brauchen die Duschkabinen nicht aus einem Container herausgenommen und aufgebaut zu werden, sondern sind durch den Duschcontainer selbst gebildet. Der erfindungsgemäße mobile Duschcontainer muss nur an den Einsatzort gebracht werden und ist sofort einsatzbereit. Daher ist der mobile Duschcontainer als ein Absetzcontainer ausgebildet. Dies ermöglicht einen vereinfachten Transport, da ein Absetzcontainer mit einem Anhänger für ein Kraftfahrzeug oder einem Auflieger transportiert werden kann.

Weiter kann erfindungsgemäß vorgesehen sein, dass die Duschkabinen baulich starr mit den Duschbereich begrenzenden Wänden der Stirnseiten des Containers verbunden sind. Besonders vorteilhaft sind die Duschkabinen sowohl mit der vorderen als auch der hinteren Wand des Duschbereichs verbunden, welche die Stirnseiten des Containers bilden. Weiter bevorzugt sind die Duschkabinen mit einem starren Hauptrahmen des Duschcontainers verbunden. Durch diese Bauweise weißt der Container beim Absetzen eine erhöhte Stabilität auf und es gibt keine speziellen Einschränkungen oder weitere Maßnahmen vor der Inbetriebnahme, bis auf den Anschluss an eine Wasserversorgung sowie gegebenenfalls an eine Kanalisation und gegebenenfalls an eine Stromversorgung. Weiter weist der mobile Duschcontainer an seinen Außenseiten Klappen zum Verschließen der Außenseiten auf, die in einem Transportzustand verschlossen sind und an den Längsseiten dann die Containeraußenwand bilden, und die in einem aufgeklappten Nutzungszustand jeweils ein Vordach bilden. Dadurch kann die mobile Duschvorrichtung für den Transport sicher verschlossen werden und insbesondere wird der Luftwiderstand verringert. Ein weiterer Vorteil des Vordaches besteht darin, dass der Bereich vor den Zugängen zu den Duschkabinen wettergeschützt ist und beispielsweise als Umkleidebereich verwendet werden kann. Bei der Verwendung als Umkleidebereich, ist es zweckmäßig, um die mobile Duschvorrichtung und den Umkleidebereich herum eine Plane oder einen Zaun als Sichtschutz vorzusehen. Weiter ist es bevorzugt an den einzelnen Duschkabinen Sichtschutz insbesondere Duschvorhänge vorzusehen. Durch den erfindungsgemäßen mobilen Duschcontainer lassen sich Transportkosten, Aufbauzeiten und Personalaufwand minimieren.

In einer bevorzugten Ausgestaltung der erfindungsgemäßen mobilen Duschvorrichtung ist es vorgesehen, dass zum Absetzen des Duschcontainers an einem starren Hauptrahmen des Duschcontainers eine Abrollvorrichtung vorgesehen ist. Ebenso ist es bevorzugt, dass an dem Hauptrahmen eine Verladevorrichtung vorgesehen ist. Diese ist bevorzugt an einer Stirnseite des Duschcontainers angeordnet. Die Verladevorrichtung ist bevorzugt durch eine Verladeöse gebildet und die Abrollvorrichtung ist bevorzugt durch Rollen gebildet, insbesondere durch metallische Zylinderrollen. Dadurch wird das Absetzen des Duschcontainers erleichtert. Da die Duschkabinen baulich starr mit den stirnseitigen Wänden und dem Hauptrahmen des Containers verbunden sind, erlaubt die dadurch erreichte strukturelle Stabilität auch ein Abrollen mit einem großen Abrollwinkel.

In einer weiter bevorzugten Ausführungsform des mobilen Duschcontainers ist es vorgesehen, dass an einer Außenseite einer Stirnseite Wasserinstallationen und Elektroinstallationen vorgesehen sind. Hierbei kann es sich bevorzugt um Handwaschbecken mit Spiegel sowie Steckdosen handeln. Durch die Anbringung auf der Außenseite einer Stirnseite sind sämtliche Laufwege nach außen verlagert. Diese zusätzlichen Sanitäreinrichtungen können somit vorteilhaft problemlos staufrei von Nutzern erreicht werden. Das führt zu einer geringeren Nutzungszeit der einzelnen Duschkabinen und somit zu einem erhöhten Durchsatz und verringerten Wartezeiten für nachfolgende Duschkabinennutzer. Diese zusätzlichen Installationen können auch in Stauräumen untergebracht sein, die sich durch Türen öffnen lassen.

In einer weiter bevorzugten Ausgestaltung der erfindungsgemäßen mobilen Duschvorrichtung ist es vorgesehen, dass alle Wasserinstallationen wie Frischwasserleitungen und Ablaufrinne in der Mitte der mobilen Duschvorrichtung angeordnet sind. Dies ist deshalb besonders vorteilhaft, weil alle einzelnen Duschkabinen an die Mitte der mobilen Duschvorrichtung angrenzen. Bringt man die Duschköpfe und Armaturen auf dieser Innenseite der Duschkabinen an, so können die Duschköpfe und Armaturen mit denkbar kürzesten Rohrleitungen an eine in der Mitte der mobilen Duschvorrichtung angeordnete Frischwasserleitung angeschlossen werden. Entsprechendes gilt für eine in der Mitte der mobilen Duschvorrichtung angeordnete Ablaufrinne. In bevorzugter Ausgestaltung der Erfindung sind die Duschköpfe und Armaturen baulich fest mit einer in der Mitte der mobilen Duschvorrichtung angeordnete Frischwasserleitung verbaut. Auch kann in besonders günstiger Ausgestaltung der Erfindung eine in der Mitte der mobilen Duschvorrichtung angeordnete Ablaufrinne baulich fest verbaut sein.

In einer weiteren bevorzugten Ausgestaltung der erfindungsgemäßen mobilen Duschvorrichtung ist eine Heizungseinrichtung zum Erwärmen des Duschwassers, vorgesehen. Die Heizungseinrichtung ist bevorzugt durch eine Ölheizung gebildet, kann aber auch durch andere bekannte Heizungsarten, beispielsweise eine Gasheizung oder eine Elektroheizung gebildet sein. Besonders bevorzugt weist die Heizungseinrichtung eine Heizleistung von etwa 250 kW auf. Dadurch kann eine ausreichende Menge an Warmwasser auch bei gleichzeitiger Nutzung aller vorhandenen Duschkabinen gewährleistet werden. Die Heizungseinrichtung kann außerhalb der mobilen Duschvorrichtung angeordnet sein. Erfindungsgemäß ist die Heizungseinrichtung jedoch in die mobile Duschvorrichtung integriert. Dabei ist die Heizungseinrichtung in einem separaten Bereich der mobilen Duschvorrichtung angeordnet. Die Heizungseinrichtung ist in einem von den Duschkabinen abgetrennten, an die Duschkabinen angrenzenden Raum an einer Stirnseite der mobilen Duschvorrichtung angeordnet. Die Wasserversorgung kann über ein an das kommunale Wasserversorgungsnetz angeschlossene Leitung oder aus einem Wassertank erfolgen. Durch diese kompakte Bauweise des Duschcontainers ist das Transportvolumen vergleichsweise gering und beim Entladen, beziehungsweise beim Aufbau werden weniger Personen und Maschinen benötigt. Der Duschcontainer kann einfach auf einer ebenen Fläche abgesetzt werden und die Verbindungen zum Wasser-, Strom- und Abwassernetz geschaffen werden, um einsatzbereit zu sein. Dadurch lassen sich Transportkosten, Aufbauzeiten und Personalaufwand weiter minimieren.

Je nach Einsatzzweck des erfindungsgemäßen Duschcontainers werden zwei vorteilhafte Ausführungsformen vorgeschlagen, wonach der Duschcontainer bei einer Gesamtlänge von etwa 5 m zweimal sechs Duschkabinen oder bei einer Gesamtlänge von etwa 10 m zweimal zwölf Duschkabinen aufweist. Die letztgenannte Ausführungsform ist besonders für Großveranstaltungen geeignet, denn in den 24 Duschkabinen können pro Stunde bis zu 500 Personen eine Dusche nehmen.

In Weiterbildung der Erfindung ist vorgesehen, dass die Duschkabinen aus Rohren bestehen, von denen Wände zu Abgrenzung der Duschkabinen gehalten werden. Diese Ausführungsform ist besonders leicht. Die Erfindung umfasst Ausführungsformen, bei denen die Wände beispielsweise aus Holz, Metall oder Kunststoff bestehen. Die Rohre sind dabei bevorzugt als Quadratrohren gebildet.

Die vorstehend in der Beschreibung genannten Merkmale und Merkmalskombinationen, sowie die nachfolgend in den Figurenbeschreibungen genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung, wie er durch die angehängten Ansprüche definiert ist, zu verlassen.

Die verwendeten Ausdrücke wie "erste", "zweite" "weitere", "letzte", "linke", "rechte", "vordere" und "hintere" sind nicht dahingehend zu verstehen, dass mit Ihnen eine bestimmte Anordnung, Menge oder Wichtigkeit verbunden ist, sondern werden lediglich dazu verwendet, um einzelne Elemente voneinander zu unterscheiden und eine Beschreibung der Figuren zu ermöglichen.

Die Erfindung wird nachfolgend in Ausführungsbeispielen anhand der zugehörigen Zeichnungen erläutert. Es zeigen:
- Figur 1: eine Draufsicht einer erfindungsgemäßen Duschvorrichtung im aufgeklappten betriebsbereiten Zustand;
- Figur 2: eine Seitenansicht der erfindungsgemäßen mobilen Duschvorrichtung;
- Figur 3: eine Draufsicht auf die vordere Stirnseite des erfindungsgemäßen Duschcontainers.

Ein erfindungsgemäßer mobiler Duschcontainer 1 ist bezüglich einer in Fahrtrichtung 4 ausgerichteten vertikalen Ebene im Wesentlichen symmetrisch aufgebaut. Er besitzt eine in Fahrtrichtung 4 gesehene rechte Reihe 5 mit sechs hintereinander angeordneten Duschkabinen 2 und eine in Fahrtrichtung 4 gesehene linke Reihe 6 mit ebenfalls sechs Duschkabinen 3, die in Fahrtrichtung 4 jeweils hintereinander angeordnet sind. Die Duschkabinen 2 grenzen mit ihren in Fahrtrichtung 4 ausgerichteten Innenwänden 22 an die Duschkabinen 3. Auf diese Weise wird fast die gesamte Grundfläche des Duschcontainers 1 von Duschkabinen 2, 3 ausgefüllt. Die rechten Duschkabinen 2 haben jeweils einen rechten Zugang 7 von der rechten Außenseite 9 des Trailers 1 und die linken Duschkabinen 3 einen linken Zugang 8 von der linken Außenseite 10 des Trailers 1. Dadurch ist jede Duschkabine 2, 3 von außen zugänglich und der erfindungsgemäße Duschcontainer 1 benötigt keine inneren Zugänge zu den Duschkabinen 2, 3, was den Vorteil hat, dass auf der Grundfläche des Duschcontainers 1 mehr Duschkabinen 2, 3 untergebracht werden können, als bei anderen Duschcontainern, die mit inneren Zugängen zu den Duschkabinen versehen sind. Die einzelnen Duschkabinen 2, 3 sind bevorzugt mit Sichtschutz ausgestattet, insbesondere mit Duschvorhängen 21

Die Böden 20 der Duschkabinen 2, 3 befinden sich dicht über dem Niveau des Untergrundes, auf dem der Duschcontainer 1 abgestellt ist. Um den Personen die Benutzung der Duschen zu ermöglichen kann deshalb auf Treppenstufen verzichtet werden.

Im Betrieb steht der Duschcontainer 1 auf einem ebenen Untergrund. Dieser kann bereits durch einen natürlichen ebenen Boden gebildet sein oder durch Ausgleichsmittel eben gemacht werden, beispielsweise durch Holzpaletten. Dadurch ist eine einfache Positionierung möglich, die einen sicheren Stand gewährleistet und keine aufwändigen Stützen oder andere Positionierungsmittel erfordert. Insbesondere ist ein nahezu ebenerdiger Einstieg möglich, so dass an der mobilen Duschvorrichtung keine zusätzlichen Stufen vorgesehen werden müssen, um den Einstieg zu erleichtern, wie das beispielsweise bei Duschanhängern der Fall wäre.

Der Duschcontainer 1 ist an seiner rechten Außenseite 9 mit einer rechten Klappe 13 und an seiner linken Außenseite 10 mit einer linken Klappe 14 versehen. Die Klappen 13, 14 erstrecken sich über die gesamte Länge der Zugänge 7, 8 aller Duschkabinen 2, 3 und in vertikaler Richtung über die gesamte Höhe der Duschkabinen 2, 3. Mittels der Klappen 13, 14 werden die Außenseiten 9, 10 des Duschcontainers 1 im Fahrbetrieb fest verschlossen. Im Duschbetrieb können die Klappen 13, 14 hochgeklappt werden, um die Zugänge 7, 8 zu den Duschkabinen 2, 3 freizugeben. Die Klappen 13, 14 können im Duschbetrieb in horizontaler Lage fixiert werden, so dass sie jeweils ein Vordach über dem Zugangsbereich vor den Duschkabinen 2, 3 bilden.

Des Weiteren sind an einer Stirnseite rechte und linke Stauräume 24, 25 vorgesehen, die sich zwischen der Stirnseite des Duschcontainers und dem eigentlichen Duschbereich erstrecken und entsprechend mit rechten und linken Türen 11, 12 aufgeklappt und verriegelt werden können. Im Bereich der Stauräume 24, 25 können Wasserinstallationen und Elektroinstallationen für den Betrieb des Duschcontainers 1 untergebracht werden. Die Wasserinstallationen und Elektroinstallationen können auch separat zwischen den Stauräumen 24, und 25 vorgesehen sein, so dass die Stauräume 24, 25 für weitere Sanitäranlagen wie beispielsweise Waschbecken und Spiegel vorgesehen sein können.

Im Inneren des Duschcontainers 1 sind alle Wasserinstallationen wie Trinkwasserleitungen 15 und Ablaufrinnen16 in der Mitte 17 des Trailers angeordnet. Auf diese Weise können alle Duschkabinen 2, 3 über die gesamte Länge des Duschcontainers 1 mit Frischwasser zum Duschen versorgt werden. Entsprechendes gilt für die Ablaufrinnen 16 in der Mitte 17 des Trailers 1, in denen sämtliche Abwässer der Duschkabine 2, 3 abgeführt werden können. Durch ein Gefälle in den Duschwannen wird das Abwasser in die mittig gelegene Ablaufrinne 16, die mit einem Gefälle versehen ist, eingeleitet und zu einem zentralen Ablaufpunkt geleitet, der an das öffentliche Kanalsystem angeschlossen werden kann.

Wenn kein warmes Frischwasser für die Duschen zur Verfügung steht, kann der Trailer 1 auch mit einer Heizungseinrichtung für die Warmwasserbereitung ausgestattet werden.

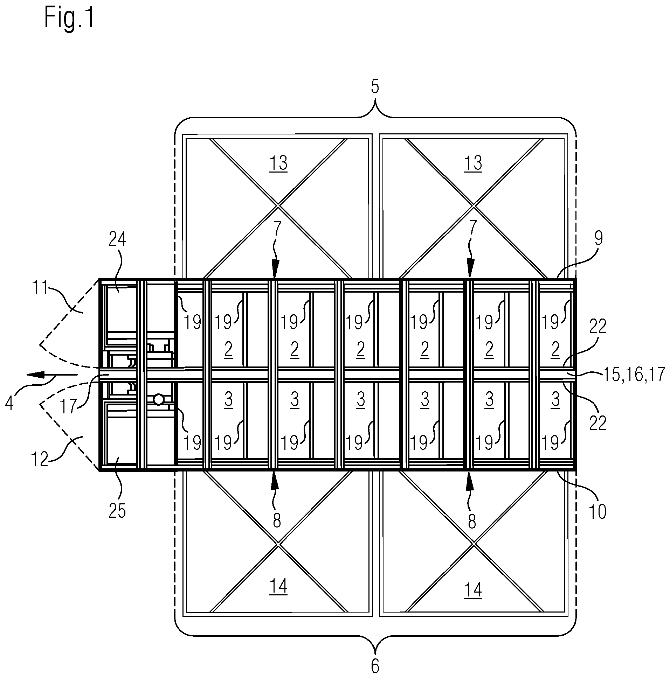

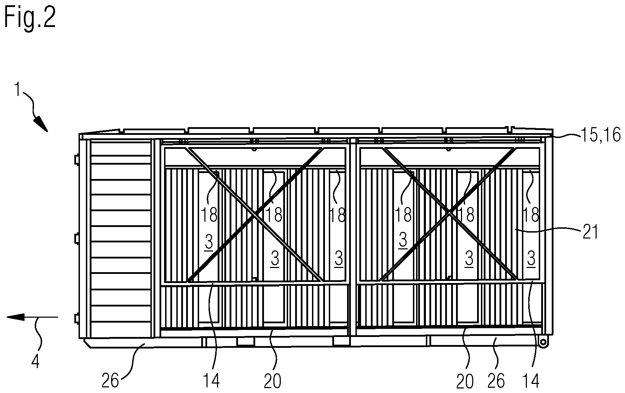

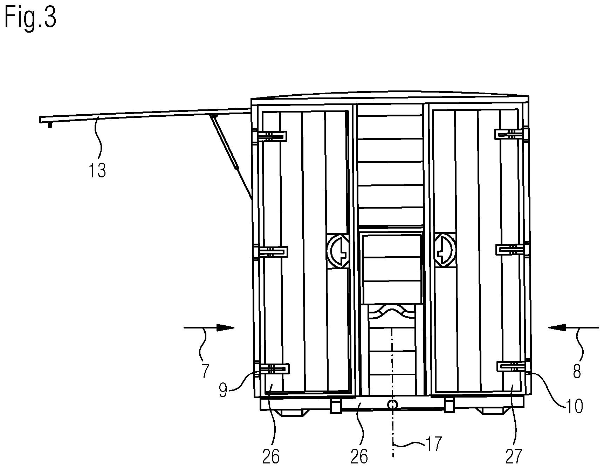

Der in den Figuren 1-3 dargestellte Duschcontainer 1 besitzt insgesamt zwölf Duschkabinen 2, 3 und ist mit dieser Auslegung eher für kleinere Veranstaltungen geeignet. Die Erfindung umfasst aber jede im Rahmen der gesetzlich vorgeschriebenen maximalen Abmessungen von Duschcontainern, die am Straßenverkehr teilnehmen, mögliche Anzahl von Duschkabinen. Insbesondere kann ein für Großveranstaltungen bestimmter erfindungsgemäßer Duschcontainer statt der hier beschriebenen Länge von etwa 5 m und 2 x 6 Duschkabinen 2, 3 eine Gesamtlänge von etwa 10 m mit 2 x 12 Duschkabinen aufweisen. Bevorzugt entsprechen die Außenmaße des Duschcontainers einem Standardcontainer.

Der erfindungsgemäße Duschcontainer 1 ist besonders leicht gebaut, wenn wie im vorliegenden Ausführungsbeispiel die Duschkabinen 2, 3 aus Quadratrohren 18 bestehen, die Wände 19 aus Kunststoff zur Abgrenzung der Duschkabinen 2, 3 halten. Außerdem sind die Böden 20 der Duschkabinen 2, 3 aus geriffeltem Aluminiumblech gefertigt. Dieses Material ist leicht, lässt sich problemlos reinigen und gewährleistet außerdem Rutschfestigkeit beim Duschen. Der Duschcontainer ist in seiner Stabilität besonders durch seinen starren Hauptrahmen 26 charakterisiert. Die Duschkabinen sind an diesem Hauptrahmen 26 starr befestigt. Der starre Hauptrahmen 26 weist ein einer Stirnseite außen eine Verladevorrichtung auf, insbesondere eine Verladeöse. Ebenfalls sind an der Unterseite des Duschcontainers Abrollvorrichtungen vorgesehen. Diese sind bevorzugt an der Kante der Stirnseiten angeordnet und durch metallene Zylinderrollen gebildet. Dadurch wird das Absetzen des Duschcontainers erleichtert. Da die Duschkabinen 2, 3 ebenfalls baulich starr mit dem Hauptrahmen 26 des Duschcontainers verbunden sind, erlaubt die dadurch erreichte strukturelle Stabilität auch ein Abrollen mit einem großen Abrollwinkel.

### BEZUGSZEICHENLISTE

- 1: Mobiler Duschcontainer
- 2: rechte Duschkabine
- 3: linke Duschkabine
- 4: Längsrichtung
- 5: rechte Reihe
- 6: linke Reihe
- 7: rechter Zugang
- 8: linker Zugang
- 9: rechte Außenseite
- 10: linke Außenseite
- 11: rechte Tür
- 12: linke Tür
- 13: rechte Klappe
- 14: linke Klappe
- 15: Trinkwasserleitungen
- 16: Ablaufrinne
- 17: Mitte
- 18: Quadratrohre
- 19: Wände
- 20: Bodenplatte
- 21: Duschvorhänge
- 22: Innenwände
- 24: rechter Stauraum
- 25: linker Stauraum
- 26: Hauptrahmen mit Verladeöse und Rollen

## Patentansprüche

1. Mobiler Duschcontainer mit Duschkabinen (2, 3) mit zwei gegenüber liegenden Stirnseiten und zwei gegenüberliegenden Außenseiten (9, 10), wobei zwischen den Stirnseiten ein Duschbereich gebildet ist, in dem zwei entlang der Außenseiten (9, 10) ausgerichtete Reihen (5, 6) von Duschkabinen (2, 3) aneinander angrenzend angeordnet sind, wobei für die Duschkabinen (2, 3) ein äußerer Zugang (7, 8) von einer Außenseite (9, 10) des Duschcontainers (1) vorhanden ist, wobei an seinen Außenseiten (9, 10) Klappen (13, 14) zum Verschließen der Außenseiten (9, 10) in einem Transportzustand vorgesehen sind, die in einem aufgeklappten Nutzungszustand jeweils ein Vordach bilden, **dadurch gekennzeichnet, dass** die Duschkabinen (2, 3) baulich starr mit einem den Duschbereich begrenzenden Hauptrahmen (26) des mobilen Duschcontainers verbunden sind wobei die Duschkabinen (2, 3) baulich starr mit den Duschbereich begrenzenden Wänden der Stirnseiten des Duschcontainers verbunden sind, wobei die Duschkabinen (2, 3) sowohl mit einer vorderen als auch einer hinteren Wand des Duschbereichs verbunden sind, welche die Stirnseiten des Containers bilden, und wobei der mobile Duschcontainer als Absetzcontainer ausgebildet ist.

2. Mobiler Duschcontainer nach Anspruch 1, **dadurch gekennzeichnet, dass** zum Absetzen des Duschcontainers an dem, vorzugsweise starren, Hauptrahmen Verladevorrichtungen und/oder Abrollvorrichtungen (26) vorgesehen sind.

3. Mobiler Duschcontainer nach Anspruch 1 oder 2, **dadurch gekennzeichnet, dass** an einer Außenseite einer Stirnseite und/oder in rechten und/oder in linken Stauräumen (24, 25), die vorzugsweise mit rechten und linken Türen (11, 12) verschließbar sind, Wasserinstallationen und Elektroinstallationen vorgesehen sind.

4. Mobiler Duschcontainer nach einem der vorhergehenden Ansprüche, **dadurch gekennzeichnet, dass** alle Wasserinstallationen, vorzugsweise Trinkwasserleitungen (15) und Ablaufrinne (16), in der Mitte (17) des Duschcontainers (1) angeordnet sind.

5. Mobiler Duschcontainer nach einem der vorhergehenden Ansprüche, **dadurch gekennzeichnet, dass** der Duschcontainer (1) mit einer Heizungsvorrichtung für die Warmwasserbereitung versehen ist.

6. Mobiler Duschcontainer nach Anspruch 5, **dadurch gekennzeichnet, dass** die Heizungsvorrichtung durch eine Ölheizung, eine Gasheizung und/oder eine Elektroheizung gebildet ist.

7. Mobiler Duschcontainer nach einem der vorhergehenden Ansprüche, **dadurch gekennzeichnet, dass** er bei einer Gesamtlänge von etwa 5 m zweimal sechs Duschkabinen (2, 3) oder bei einer Gesamtlänge von etwa 10 m zweimal zwölf Duschkabinen (2, 3) aufweist.

8. Mobiler Duschcontainer nach einem der vorhergehenden Ansprüche, **dadurch gekennzeichnet, dass** die Duschkabinen (2, 3) aus Rohren (18) bestehen, die Wände (19) zur Abgrenzung der Duschkabinen (2, 3) halten.

9. Mobiler Duschcontainer nach einem der vorhergehenden Ansprüche, **dadurch gekennzeichnet, dass** der Boden (20) der Duschkabinen (2, 3) aus geriffeltem Aluminiumblech besteht.

## Claims

1. A mobile shower container having shower stalls (2, 3) having two end faces opposite each other and two outer sides (9, 10) opposite each other, a shower region being formed between the end faces, in which two rows (5, 6) of shower stalls (2, 3) aligned along the outer sides (9, 10) are disposed adjacent to each other, an outer entrance (7, 8) from an outer side (9, 10) of the shower container (1) being present for the shower stalls (2, 3), flaps (13, 14) for closing off the outer sides (9, 10) in a transport state being provided on the outer sides (9, 10) of the shower container and each forming an awning in an unfolded usage state, **characterized in that** the shower stalls (2, 3) are structurally rigidly connected to a main framework (26) of the mobile shower container adjacent to the shower region, wherein the shower stalls (2, 3) are structurally rigidly connected to walls of the end faces of the shower container adjacent to the shower region, wherein the shower stalls (2, 3) are connected to both a front and a rear wall of the shower region, said walls forming the end faces of the container, and wherein the mobile shower container is implemented as a skip container.

2. The mobile shower container according to claim 1, **characterized in that** loading devices and/or roll-off devices (26) are provided on the preferably rigid main framework for setting the shower container in place.

3. The mobile shower container according to claim 1 or 2, **characterized in that** water installations and electrical installations are provided on an outer side of an end face and/or in right and/or left storage spaces (24, 25) that are preferably closeable by means of right and left doors (11, 12).

4. The mobile shower container according to any one of the preceding claims, **characterized in that** all water installations, preferably drinking water lines (15) and a drainage channel (16), are disposed in the center (17) of the shower container.

5. The mobile shower container according to any one of the preceding claims, **characterized in that** the shower container (1) is provided with a heating device for supplying hot water.

6. The mobile shower container according to claim 5, **characterized in that** the heating device is implemented by an oil heater, a gas heater, and/or an electric heater.

7. The mobile shower container according to any one of the preceding claims, **characterized in that** said container comprises two sets of six shower stalls (2, 3) for an overall length of approximately 5 m or two sets of twelve shower stalls (2, 3) for an overall length of approximately 10 m.

8. The mobile shower container according to any one of the preceding claims, **characterized in that** the shower stalls (2, 3) are made of tubes (18) for supporting walls (19) for delimiting the shower stalls (2, 3).

9. The mobile shower container according to any one of the preceding claims, **characterized in that** the floor (20) of the shower stalls (2, 3) is made of corrugated aluminum sheet.

## Revendications

1. Conteneur de douche mobile avec des cabines de douche (2, 3) avec deux côtés frontaux opposés et deux côtés extérieurs opposés (9, 10), une zone de douche étant formée entre les côtés frontaux, dans laquelle deux rangées (5, 6) de cabines de douche (2, 3) orientées le long des côtés extérieurs (9, 10) sont agencées de manière adjacente l'une à l'autre, un accès extérieur (7, 8) étant présent pour les cabines de douche (2, 3) depuis un côté extérieur (9, 10) du conteneur de douche (1), des volets (13, 14) étant prévus sur ses côtés extérieurs (9, 10) pour fermer les côtés extérieurs (9, 10) dans un état de transport, qui, dans un état d'utilisation déplié, forment respectivement un avant-toit, **caractérisé en ce que** les cabines de douche (2, 3) sont reliées de manière rigide à un cadre principal (26) du conteneur de douche mobile, délimitant la zone de douche, les cabines de douche (2, 3) étant reliées de manière rigide aux parois des côtés frontaux du conteneur de douche qui délimitent la zone de douche, les cabines de douche (2, 3) étant reliées à la fois à une paroi avant et à une paroi arrière de la zone de douche, qui forment les côtés frontaux du conteneur, et le conteneur de douche mobile étant conçu comme un conteneur de dépose.

2. Conteneur de douche mobile selon la revendication 1, **caractérisé en ce que** des dispositifs de chargement et/ou des dispositifs de roulement (26) sont prévus pour déposer le conteneur de douche sur le cadre principal, de préférence rigide.

3. Conteneur de douche mobile selon la revendication 1 ou 2, **caractérisé en ce que** des installations d'eau et des installations électriques sont prévues sur un côté extérieur d'un côté frontal et/ou dans des espaces de rangement (24, 25) droit et/ou gauche, qui peuvent de préférence être fermés par des portes droite et gauche (11, 12).

4. Conteneur de douche mobile selon l'une des revendications précédentes, **caractérisé en ce que** toutes les installations d'eau, de préférence les conduites d'eau potable (15) et la gouttière d'évacuation (16), sont agencées au centre (17) du conteneur de douche (1).

5. Conteneur de douche mobile selon l'une des revendications précédentes, **caractérisé en ce que** le conteneur de douche (1) est pourvu d'un dispositif de chauffage pour la production d'eau chaude.

6. Conteneur de douche mobile selon la revendication 5, **caractérisé en ce que** le dispositif de chauffage est formé par un chauffage au mazout, un chauffage au gaz et/ou un chauffage électrique.

7. Conteneur de douche mobile selon l'une des revendications précédentes, **caractérisé en ce qu'**il présente deux fois six cabines de douche (2, 3) pour une longueur totale d'environ 5 m ou deux fois douze cabines de douche (2, 3) pour une longueur totale d'environ 10 m.

8. Conteneur de douche mobile selon l'une des revendications précédentes, **caractérisé en ce que** les cabines de douche (2, 3) sont constituées de tubes (18) qui maintiennent des parois (19) pour délimiter les cabines de douche (2, 3).

9. Conteneur de douche mobile selon l'une des revendications précédentes, **caractérisé en ce que** le sol (20) des cabines de douche (2, 3) est constitué de tôle d'aluminium striée.
